# EUROPEAN PATENT APPLICATION

(11) **EP 3 911 016 A1**
(43) Date of publication of application: **17.11.2021**
(21) Application number: 20737969.4
(22) Date of filing: 09.01.2020
(51) Int. Cl.: H04W 36/14, H04W 12/04, H04W 88/06

(54) **TERMINAL DEVICE, BASE STATION DEVICE, AND METHOD**

(30) Priority: 10.01.2019 JP 2019002865
(71) Applicant: Sharp Kabushiki Kaisha, Sakai-shi Osaka 590-8522 (JP); FG Innovation Company Limited, Hong Kong (CN)
(72) Inventor: HORI, Takako, Osaka 590-8522 JAPAN (JP); YAMADA, Shohei, Osaka 590-8522 JAPAN (JP); TSUBOI, Hidekazu, Osaka 590-8522 JAPAN (JP)
(74) Representative: Müller-Boré & Partner Patentanwälte PartG mbB
(86) International application number: PCT/JP2020/000542
(87) International publication number: WO 2020/145367

(57) **Abstract**

A terminal apparatus for communicating with a base station apparatus, the terminal apparatus includes: a receiver configured to receive an RRC message from the base station apparatus; and a processing unit, in which the RRC message is a message for indicating mobility from a first RAT to a second RAT, the first RAT being NR, and the processing unit performs, based on a fact that information configured to indicate that the second RAT is UTRA is included in the RRC message, processing to forward, to upper layers, information used for key synchronisation and key freshness included in the RRC message.

## Description

### Technical Field

The present invention relates to a terminal apparatus, a base station apparatus, and a method. This application claims priority based on JP 2019-2865 filed on January 10, 2019, the contents of which are incorporated herein by reference.

### Background Art

A radio access method and a radio network for cellular mobile communications (which will hereinafter be referred to as "Long Term Evolution (LTE; trade name)" or "Evolved Universal Terrestrial Radio Access (E-UTRA)") and a core network (which will be referred to as "Evolved Packet Core or EPC") have been studied by the 3rd Generation Partnership Project (3GPP).

Furthermore, as a radio access method and a radio network technology for a 5th generation cellular system, technical studies and standardization of LTE-Advanced Pro which is an enhanced technology of LTE and New Radio technology (NR) which is a new radio access technology have been conducted by the 3GPP (Non Patent Literature (NPL) 1). Furthermore, 5 Generation Core Network (5GC), which is a core network for the 5th generation cellular system, has also been studied (NPL 2).

### Citation List

### Non Patent Literature

NPL 1: 3GPP RP-170855, "Work Item on New Radio (NR) Access Technology"
NPL 2: 3GPP TS 23.501 v15.3.0, "System Architecture for the 5G System; Stage 2"
NPL 3: 3GPP TS 36.300, v15.3.0, "Evolved Universal Terrestrial Radio Access (E-UTRA) and Evolved Universal Terrestrial Radio Access Network (E-UTRAN); Overall description; Stage 2"
NPL 4: 3GPP TS 36.331 v15.3.0, "Evolved Universal Terrestrial Radio Access (E-UTRA); Radio Resource Control (RRC); Protocol specifications"
NPL 5: 3GPP TS 36.323 v15.3.0, "Evolved Universal Terrestrial Radio Access (E-UTRA); Packet Data Convergence Protocol (PDCP) specification"
NPL 6: 3GPP TS 36.322 v15.3.0, "Evolved Universal Terrestrial Radio Access (E-UTRA); Radio Link Control (RLC) protocol specification"
NPL 7: 3GPP TS 36.321 v15.3.0, "Evolved Universal Terrestrial Radio Access (E-UTRA); Medium Access Control (MAC) protocol specification"
NPL 8: 3GPP TS 37.340v 15.3.0, "Evolved Universal Terrestrial Radio Access (E-UTRA) and NR; Multi-Connectivity; Stage 2"
NPL 9: 3GPP TS 38.300v 15.3.0, "NR; NR and NG-RAN Overall description; Stage 2"
NPL 10: 3GPP TS 38.331 v15.3.0, "NR; Radio Resource Control (RRC); Protocol specifications"
NPL 11: 3GPP TS 38.323 v15.3.0, "NR; Packet Data Convergence Protocol (PDCP) specification"
NPL 12: 3GPP TS 38.322 v15.3.0, "NR; Radio Link Control (RLC) protocol specification"
NPL 13: 3GPP TS 38.321 v15.3.0, "NR; Medium Access Control (MAC) protocol specification"
NPL 14: 3GPP TS 23.401 v15.0.0, "General Packet Radio Service (GPRS) enhancements for Evolved Universal Terrestrial Radio Access Network (E-UTRAN) access"
NPL 15: 3GPP TS 23.502 v15.3.0, "Procedure for 5G System; Stage 2"
NPL 16: 3GPP TS 37.324 v15.1.0, "NR; Service Data Adaptation Protocol (SDAP) Specification"
NPL 17: 3GPP RP-161266, "5G Architecture Options-Full Set"

### Summary of Invention

### Technical Problem

As one of the technical studies of NR, a mechanism called Multi-RAT Dual Connectivity (or Multi-Radio Dual Connectivity: MR-DC) is being studied that allows cells of radio access technologies (RATs) of both E-UTRA and NR to be grouped into a cell group on a RAT basis and to be allocated to UE such that a terminal apparatus communicates with one or more base station apparatuses (NPL 8).

However, since the formats and functions of the communication protocols used in the E-UTRA and the NR differ, and since a core network to be used differs depending on a form of the MR-DC as described in NPL 8, there is a problem in that the protocol processing becomes complex compared to Dual Connectivity in existing LTE using only E-UTRA as a RAT, and using only EPC, which is the core network of LTE, as the core network, and thus a base station apparatus and a terminal apparatus are not able to efficiently communicate with each other.

One aspect of the present invention is realized with the situations described above taken into account, and one object thereof is to provide a terminal apparatus capable of efficiently communicating with a base station apparatus, a base station apparatus, a method used for the terminal apparatus, and an integrated circuit mounted in the terminal apparatus.

### Solution to Problem

In order to accomplish the object described above, an aspect of the present invention is contrived to provide the following measures. That is, a terminal apparatus for communicating with a base station apparatus, the terminal apparatus including: a receiver configured to receive an RRC message from the base station apparatus; and a processing unit, in which the RRC message is a message for indicating mobility from a first RAT to a second RAT, the first RAT being NR, and the processing unit performs, based on a fact that information for indicating that the second RAT is UTRA is included in the RRC message, processing to forward, to upper layers, information used for key synchronisation and key freshness included in the RRC message.

An aspect of the present invention is a base station apparatus for communicating with a terminal apparatus, the base station apparatus including: a transmitter configured to transmit an RRC message to the terminal apparatus; and a processing unit, in which the RRC message is a message for indicating mobility from a first RAT to a second RAT, the first RAT being NR, and the processing unit causes the terminal apparatus, based on a fact that information for indicating that the second RAT is UTRA is included in the RRC message, to perform processing to forward, to upper layers, information used for key synchronisation and key freshness included in the RRC message.

An aspect of the present invention is a method for a terminal apparatus for communicating with a base station apparatus, the method including the step of: receiving an RRC message from the base station apparatus, in which the RRC message is a message for indicating mobility from a first RAT to a second RAT, the first RAT being NR, and based on a fact that information for indicating that the second RAT is UTRA is included in the RRC message, processing to forward, to upper layers, information used for key synchronisation and key freshness included in the RRC message is performed.

An aspect of the present invention is a method for a base station apparatus for communicating with a terminal apparatus, the method including the step of: transmitting an RRC message to the terminal apparatus, in which the RRC message is a message for indicating mobility from a first RAT to a second RAT, the first RAT being NR, and the terminal apparatus is caused, based on a fact that information for indicating that the second RAT is UTRA is included in the RRC message, to perform processing to forward, to upper layers, information used for key synchronisation and key freshness included in the RRC message.

These comprehensive or specific aspects may be implemented in a system, an apparatus, a method, an integrated circuit, a computer program, or a recording medium, or may be implemented in any combination of systems, apparatuses, methods, integrated circuits, computer programs, and recording media.

### Advantageous Effects of Invention

According to one aspect of the present invention, a terminal apparatus can efficiently perform communication by reducing complexity of protocol processing.

### Brief Description of Drawings

FIG. 1 is a schematic diagram of a communication system according to each embodiment of the present invention.
FIG. 2 is a diagram of protocol stacks of a UP and a CP of a terminal apparatus and a base station apparatus in E-UTRA according to each embodiment of the present invention.
FIG. 3 is a diagram of protocol stacks of the UP and the CP of the terminal apparatus and the base station apparatus in NR according to each embodiment of the present invention.
FIG. 4 is a diagram illustrating an example of a flow of a procedure for various configurations in an RRC 208 and/or an RRC 308 according to each embodiment of the present invention.
FIG. 5 is a block diagram illustrating a configuration of a terminal apparatus according to each embodiment of the present invention.
FIG. 6 is a block diagram illustrating a configuration of a base station apparatus according to each embodiment of the present invention.
FIG. 7 illustrates an example of a processing method of a UE 122 according to an embodiment of the present invention.
FIG. 8 illustrates another example of a processing method of the UE 122 according to an embodiment of the present invention.

### Description of Embodiments

Hereinafter, an embodiment of the present invention will be described in detail with reference to the drawings.

LTE (and LTE-A Pro) and NR may be defined as different RATs. The NR may be defined as a technology included in the LTE. The LTE may be defined as a technology included in the NR. In addition, the LTE that is connectable to the NR using Multi RAT (or Radio) Dual connectivity may be distinguished from the existing LTE. The present embodiment may be applied to the NR, the LTE and other RATs. Terms associated with the LTE and the NR are used in the following description. However, the present invention may be applied to other technologies using other terms. In the present embodiment, the term "E-UTRA" may be replaced with "LTE," and the term "LTE" may be replaced with "E-UTRA".

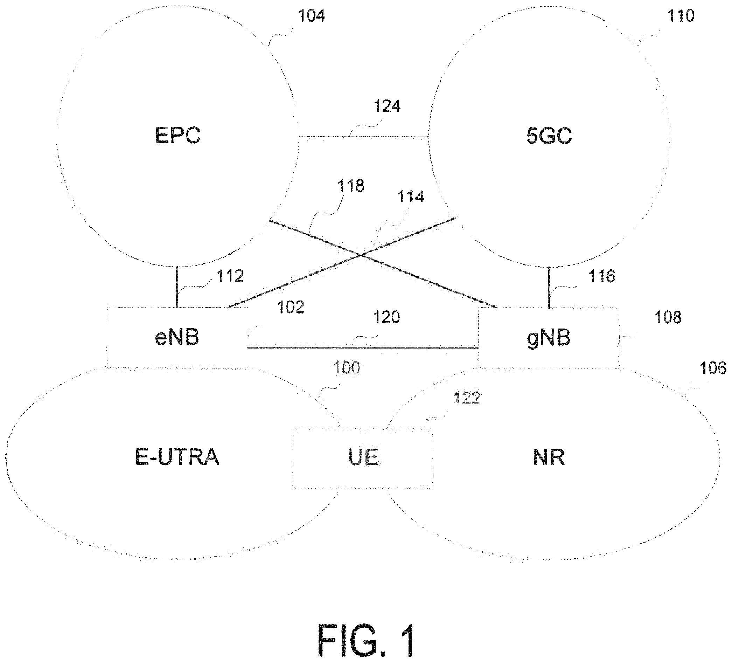

FIG. 1 is a schematic diagram of a communication system according to each embodiment of the present invention.

An E-UTRA 100 is a radio access technology described in NPL 3 or the like, and includes a cell group (CG) configured in one or multiple frequency bands. An E-UTRAN Node B (eNB) 102 is a base station apparatus of the E-UTRA 100. An Evolved Packet Core (EPC) 104 is a core network described in NPL 14 or the like and is designed as a core network for the E-UTRA 100. An interface 112 is an interface between the eNB 102 and the EPC 104, where there is a control plane (CP) through which control signals are transferred and a user plane (UP) through which user data is transferred.

An NR 106 is a radio access technology described in NPL 9 or the like, and includes a cell group (CG) configured in one or multiple frequency bands. A g Node B (gNB) 108 is a base station apparatus of the NR 106. A 5GC 110 is a core network described in NPL 2 or the like, and is designed as a core network for the NR 106, but may also be used as a core network for the E-UTRA 100 having a function of connecting to the 5GC 110. Hereinafter, the E-UTRA 100 may include the E-UTRA 100 having a function of connecting to the 5GC 110.

An interface 114 is an interface between the eNB 102 and the 5GC 110, an interface 116 is an interface between the gNB 108 and the 5GC 110, an interface 118 is an interface between the gNB 108 and the EPC 104, an interface 120 is an interface between the eNB 102 and the gNB 108, and an interface 124 is an interface between the EPC 104 and the 5GC 110. The interface 114, the interface 116, the interface 118, the interface 120, the interface 124, and the like may be interfaces that transfer CP only, UP only, or both the CP and the UP. Furthermore, the interface 114, the interface 116, the interface 118, the interface 120, the interface 124, and the like may not exist depending on communication systems provided by network operators in some cases.

A UE 122 is a terminal apparatus supporting the NR 106 or both the E-UTRA 100 and the NR 106. As described in NPL 3 and/or NPL 9, in a case that the UE 122 connects to the core network via the E-UTRA 100 and/or the NR 106, a logical path called a Radio Bearer (RB) is established between the UE 122 and the E-UTRA 100 and/or the NR 106. The radio bearer used for the CP is referred to as a Signaling Radio Bearer (SRB), and the radio bearer used for the UP is referred to as a Data Radio Bearer (DRB). An RB Identity (or RB ID) is assigned to each RB and the RB is uniquely identified. The RB identity for SRB is referred to as an SRB Identity (or SRB ID), and the RB identity for DRB is referred to as a DRB Identity (or DRB ID).

As described in NPL 3, in a case that a connection destination core network of the UE 122 is the EPC 104, each DRB established between the UE 122 and the E-UTRA 100 and/or the NR 106 is further uniquely linked to each Evolved Packet System (EPS) bearer passing through the inside the EPC 104. An EPS bearer Identity (or ID) is assigned to each EPS bearer and the bearer is uniquely identified. Furthermore, for data passing through the same EPS bearer, the same QoS is ensured.

As described in NPL 9, in a case that a connection destination core network of the UE 122 is the 5GC 110, one or multiple DRBs established between the UE 122 and the E-UTRA 100 and/or the NR 106 are further linked to one of Packet Data Unit (PDU) sessions established in the 5GC 110. One or multiple QoS flows are present in each PDU session. Each DRB may be mapped with one or multiple QoS flows present in the PDU session to which the DRB is linked, or may not be mapped to any QoS flows. Each PDU session is identified by a PDU session Identity (or ID). Furthermore, each QoS flow is identified by a QoS flow identity. Furthermore, for data passing through the same QoS flow, the same QoS is ensured.

There is no PDU session and/or QoS flow in the EPC 104 and there is no EPS bearer in the 5GC 110. In other words, in a case that the UE 122 is connected to the EPC 104, the UE 122 has information of the EPS bearer, and in a case that the UE 122 is connected to the 5GC 110, the UE 122 has information of the PDU session and/or the QoS flow.

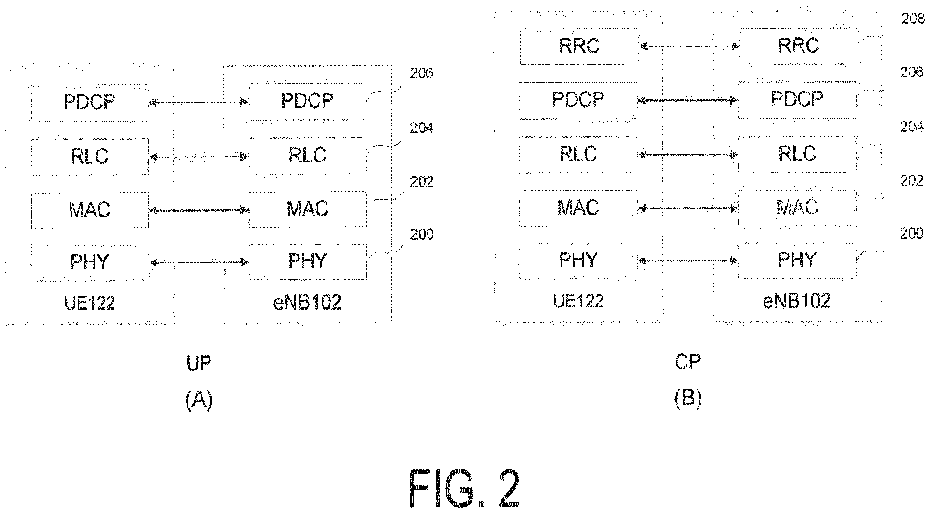

FIG. 2 is a diagram of protocol stacks of UP and CP of a terminal apparatus and a base station apparatus in an E-UTRA radio access layer according to each embodiment of the present invention.

FIG. 2(A) is a diagram of the protocol stack of the UP used in a case that the UE 122 communicates with the eNB 102 in the E-UTRA 100.

A physical layer (PHY) 200 is a radio physical layer for providing a transmission service to upper layers by using a physical channel. The PHY 200 is connected with a Medium Access Control layer (MAC) 202 of an upper layer to be described below via transport channels. Data is exchanged between the MAC 202 and the PHY 200 via the transport channels. The data is transmitted and/or received via radio physical channels between the PHYs of the UE 122 and the eNB 102.

The MAC 202 is a medium access control layer that maps various logical channels to various transport channels. The MAC 202 is connected with a radio link control layer (RLC) 204 of an upper layer to be described below via logical channels. The major classifications of the logical channel depend on the type of information to be transmitted, specifically, the logical channels are classified into control channels for transmitting control information and traffic channels for transmitting user information. The MAC 202 has a function of controlling the PHY 200 in order to perform the Discontinuous Reception and Transmission (DRX and DTX), a function of performing a random access procedure, a function of reporting transmit power information, a function of performing HARQ control, and the like (NPL 7).

The RLC 204 is a radio link control layer that divides (Segmentation) the data received from a Packet Data Convergence Protocol Layer (PDCP) 206 of an upper layer to be described below, and adjusts the data size such that a lower layer can properly perform data transmission. Furthermore, the RLC 200 also has a function of ensuring Quality of Service (QoS) required for each piece of data. In other words, the RLC 204 has a function of data retransmission control or the like (NPL 6).

The PDCP 206 is a packet data convergence protocol layer for efficiently transmitting an IP Packet, which is user data, in a radio section. The PDCP 206 may have a header compression function of compressing unnecessary control information. Furthermore, the PDCP 206 may also have a data encryption function (NPL 5).

Note that data processed in the MAC 202, the RLC 204, and the PDCP 206 are referred to as a MAC Protocol Data Unit (PDU), an RLC PDU, and a PDCP PDU, respectively. In addition, data delivered from upper layers to the MAC 202, the RLC 204, and the PDCP 206 or data delivered therefrom to upper layers are respectively referred to as a MAC Service Data Unit (SDU), an RLC SDU, and a PDCP SDU.

FIG. 2(B) is a diagram of the protocol stack of the CP used in a case that the UE 122 communicates with the eNB 102 in the E-UTRA 100.

In addition to the PHY 200, the MAC 202, the RLC 204, and the PDCP 206, there is a Radio Resource Control layer (RRC) 208 in the protocol stack of the CP. The RRC 208 is a radio link control layer that performs processing such as establishment, reestablishment, suspending, and resuming of suspending of RRC connection, a reconfiguration of RRC connection, for example, configurations of establishment, change, release, and the like of a Radio Bearer (RB) and a Cell Group, and performs, in addition to performing control and the like of a logical channel, a transport channel, and a physical channel, configurations and the like of a handover and Measurement. The RBs may be classified into a Signaling Radio Bearer (SRB) and a Data Radio Bearer (DRB), and the SRB may be used as a path for transmitting an RRC message which is control information. The DRB may be used as a path for transmitting the user data. Each RB may be configured between the RRCs 208 of the eNB 102 and the UE 122. In addition, a portion of the RB including the RLC 204 and the MAC 202 may be referred to as an RLC bearer (NPL 4).

The functional classification of the MAC 202, the RLC 204, the PDCP 206, and the RRC 208 described above is an example, and some or all of the respective functions may not be implemented. Some or all of the functions of each layer may be included in another layer.

In addition, an IP layer and a Transmission Control Protocol (TCP) layer, a User Datagram Protocol (UDP) layer, an application layer, and the like that are upper layers than the IP layer are upper layers than the PDCP layer (not illustrated). In addition, the RRC layer and a non Access Strarum (NAS) layer are also upper layers of the SDAP layer (not illustrated). In other words, the PDCP layer is a lower layer of the RRC layer, the NAS layer, the IP layer, and the Transmission Control Protocol (TCP) layer, the User Datagram Protocol (UDP) layer, and the application layer that are upper layers than the IP layer.

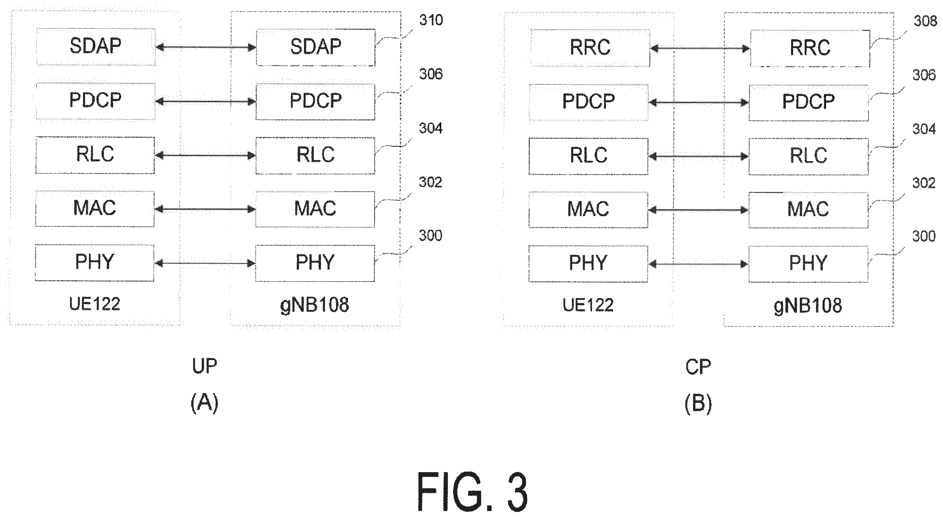

FIG. 3 is a diagram of protocol stacks of UP and CP of a terminal apparatus and a base station apparatus in an NR radio access layer according to each embodiment of the present invention.

FIG. 3(A) is a diagram of the protocol stack of the UP used in a case that the UE 122 communicates with the gNB 108 in the NR 106.

A physical layer (PHY) 300 is a radio physical layer of the NR and may provide a transmission service to upper layers by using the physical channel. The PHY 300 may be connected with the Medium Access Control layer (MAC) 302 of an upper layer to be described below via the transport channels. Data may be exchanged between the MAC 302 and the PHY 300 via the transport channels. The data may be transmitted and/or received between the PHYs of the UE 122 and the gNB 108 via the radio physical channel.

The MAC 302 is a medium access control layer that maps various logical channels to various transport channels. The MAC 302 may be connected with a Radio Link Control layer (RLC) 304 of an upper layer to be described below via the logical channels. The classification of the logical channel depends on the type of information to be transmitted, and the logical channels may be classified into the control channels for transmitting the control information and the traffic channels for transmitting the user information. The MAC 302 has a function of controlling the PHY 300 in order to perform the Discontinuous Reception and Transmission (DRX and DTX), a function of performing the random access procedure, a function of reporting the transmit power information, a function of performing the HARQ control, and the like (NPL 13).

The RLC 304 is a radio link control layer that divides (Segmentation) the data received from the Packet Data Convergence Protocol Layer (PDCP) 206 of an upper layer to be described below, and adjusts the data size such that a lower layer can properly perform data transmission. Furthermore, the RLC 304 may also have a function of ensuring Quality of Service (QoS) required for each piece of data. In other words, the RLC 304 may have a function of data retransmission control or the like (NPL 12).

A PDCP 306 is a packet data convergence protocol layer that efficiently transmits an IP Packet, which is user data, in a radio section. The PDCP 306 may have a header compression function of compressing unnecessary control information. Furthermore, the PDCP 306 may also have a data encryption function (NPL 11).

A Service Data Adaptation Protocol (SDAP) 310 is a service data adaptation protocol layer that has a function of mapping a QoS flow of a downlink transmitted from the 5GC 110 to a terminal apparatus through a base station apparatus and a DRB, mapping a QoS flow of an uplink transmitted from the terminal apparatus to the 5GC 110 through the base station apparatus and the DRB, and storing mapping rule information (NPL 16). In a case that the terminal apparatus receives an SDAP SDU with QoS flow information from upper layers, based on the stored mapping rule between the QoS flow and the DRB, the SDAP SDU is allocated to the corresponding DRB. In a case that the mapping rule between the QoS flow and the DRB is not stored, the SDAP SDU may be allocated to a default radio bearer (default DRB). The QoS flow includes one or multiple service data flows (SDFs) processed using the same QoS policy (NPL 2). In addition, the SDAP may have a Reflective QoS function of mapping the QoS flow of the uplink and the DRB based on information of the QoS flow of the downlink. Furthermore, in a case that the mapping rule between the QoS flow and the DRB is changed, an End Marker DPU may be created and transmitted to the DRB before the change to ensure in-sequence delivery of the SDAP SDU (NPL 2 and NPL 16).

The end marker PDU is an SDAP control PDU described in NPL 16, and is used by an SDAP layer of the UE for indicating that mapping between a QoS flow corresponding to a QoS flow identity included in a QoS flow identity field of this end marker PDU and a radio bearer on which this end marker PDU is transmitted is completed.

In the UE 122, one SDAP layer is present for each PDU session. Accordingly, the case that the SDAP layer is present in the UE 122 is the case that the UE 122 is connected to the 5GC 110.

In addition, an IP layer and a Transmission Control Protocol (TCP) layer, a User Datagram Protocol (UDP) layer, an application layer, and the like that are upper layers than the IP layer are upper layers than the SDAP layer (not illustrated). In addition, the RRC layer and a non Access Strarum (NAS) layer are also upper layers of the SDAP layer (not illustrated). In the NAS layer, mapping between a service data flow and the QoS flow is performed. In other words, the SDAP layer is a lower layer of the RRC layer, the NAS layer, the IP layer, and the Transmission Control Protocol (TCP) layer, the User Datagram Protocol (UDP) layer, and the application layer that are upper layers than the IP layer.

Note that the data processed in the MAC 302, the RLC 304, the PDCP 306, and the SDAP 310 may be referred to as a MAC Protocol Data Unit (PDU), an RLC PDU, a PDCP PDU, and an SDAP PDU, respectively. In addition, the data delivered from upper layers to the MAC 202, the RLC 204, and the PDCP 206 or data delivered to upper layers therefrom may be respectively referred to as a MAC Service Data Unit (SDU), an RLC SDU, a PDCP SDU, and an SDAP SDU.

FIG. 3(B) is a diagram of the protocol stack of the CP used in a case that the UE 122 communicates with the gNB 108 in the NR 106.

In addition to the PHY 300, the MAC 302, the RLC 304, and the PDCP 306, there is a Radio Resource Control layer (RRC) 308 in the protocol stack of the CP. The RRC 308 is a radio link control layer that performs processing such as establishment, reestablishment, suspending, and resuming of suspending of RRC connection, a reconfiguration of RRC connection, for example, configurations of establishment, change, release, and the like of a Radio Bearer (RB) and a Cell Group, and performs, in addition to performing control and the like of a logical channel, a transport channel, and a physical channel, configurations and the like of handover and Measurement. The RBs may be classified into a Signaling Radio Bearer (SRB) and a Data Radio Bearer (DRB), and the SRB may be used as a path for transmitting an RRC message which is control information. The DRB may be used as a path for transmitting the user data. Each RB may be configured between the RRCs 308 of the gNB 108 and the UE 122. In addition, a portion of the RB including the RLC 304 and the MAC 302 may be referred to as an RLC bearer (NPL 10).

The functional classification of the MAC 302, the RLC 304, the PDCP 306, the SDAP 310, and the RRC 308 described above is an example, and some or all of the functions may not be implemented. Furthermore, some or all of the functions of each layer may be included in another layer.

Note that each layer configured to the terminal apparatus and/or the base station apparatus may be referred to as an entity. That is, the MAC layer, the RLC layer, the PDCP layer, the SDAP layer, and the RRC layer configured to the terminal apparatus and/or the base station apparatus may be referred to as an MAC entity, an RLC entity, a PDCP entity, an SDAP entity, and an RRC entity, respectively.

Hereinafter, in each embodiment of the present invention, in order to distinguish an E-UTRA protocol and an NR protocol from each other, the MAC 202, the RLC 204, the PDCP 206, and the RRC 208 may be respectively referred to as a MAC for E-UTRA or a MAC for LTE, an RLC for E-UTRA or an RLC for LTE, a PDCP for E-UTRA or a PDCP for LTE, and an RRC for E-UTRA or an RRC for LTE. Furthermore, the MAC 302, the RLC 304, the PDCP 306, and the RRC 308 may also be referred to as MAC for NR, RLC for NR, RLC for NR, and RRC for NR, respectively. Alternatively, there may be descriptions using a space such as an E-UTRA PDCP or an LTE PDCP, an NR PDCP, and the like.

As also illustrated in FIG. 1, the eNB 102, the gNB 108, the EPC 104, and the 5GC 110 may be connected to one another via the interface 112, the interface 116, the interface 118, the interface 120, and the interface 114. Thus, the RRC 208 in FIG. 2 may be replaced with the RRC 308 in FIG. 3 to support various communication systems. Furthermore, the PDCP 206 in FIG. 2 may also be replaced with the PDCP 306 in FIG. 3. Furthermore, the RRC 308 in FIG. 3 may include the function of the RRC 208 in FIG. 2. Furthermore, the PDCP 306 in FIG. 3 may be the PDCP 206 in FIG. 2. In addition, in the E-UTRA 100, even in a case that the UE 122 communicates with the eNB 102, the NR PDCP may be used as a PDCP.

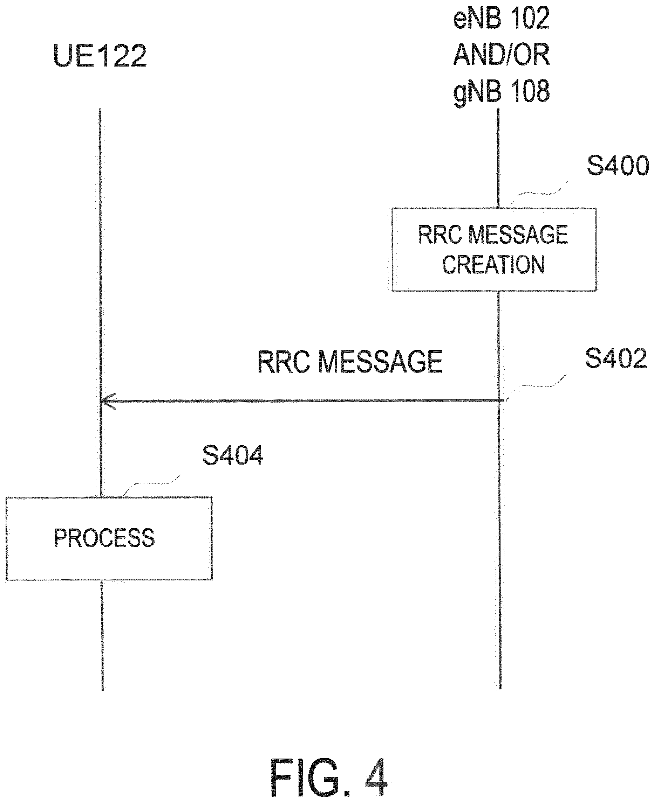

FIG. 4 is a diagram illustrating an example of a flow of a procedure for various configurations in the RRC 208 and/or the RRC 308 according to each embodiment of the present invention. FIG. 4 is an example of a flow in a case that an RRC message is transmitted from the base station apparatus (eNB 102 and/or gNB 108) to the terminal apparatus (UE 122).

In FIG. 4, the base station apparatus creates an RRC message (step S400). The creation of the RRC message in the base station apparatus may be performed in a case that the base station apparatus distributes broadcast information (System Information (SI)) or paging information, or may be performed in a case that the base station apparatus determines that it is necessary to cause a specific terminal apparatus to perform processing, for example, in a case of a configuration related to security, a reconfiguration of RRC connection (radio bearer processing (establishment, change, release, or the like), cell group processing (establishment, addition, change, release, or the like), a measurement configuration, a handover configuration, or the like), release of an RRC connection state, or the like. Furthermore, the RRC message may also be used for a handover command to a different RAT. The RRC message includes information (parameters) for various information notifications and configurations. In the specifications for RRC, such as NPL 4 or NPL 10, these parameters are referred to as fields and/or information elements, and are described using a description form called Abstract Syntax Notation One (ASN.1).

In FIG. 4, next, the base station apparatus transmits the created RRC message to the terminal apparatus (step S402). Next, the terminal apparatus performs processing, in a case that processing such as a configuration is necessary, in accordance with the received RRC message described above (step S404).

Note that the creation of the RRC message is not limited to the example described above, and the message may be created for other purposes, as described in NPL 4, NPL 10, and the like.

For example, the RRC message may be used for a configuration related to Dual Connectivity (DC) or the Multi-RAT Dual Connectivity (MR-DC) described in NPL 8.

The Dual Connectivity (DC) may be a technology for performing data communication by using both radio resources of cell groups respectively configured by two base station apparatuses (nodes), that is, a Master Cell Group (MCG) configured by a Master Node (MN) and a Secondery Cell Group (SCG) configured by a Secondery Node (SN). Furthermore, the MR-DC described in NPL 8 may be a technology in which cells of both Radio Access Technologies (RATs) of E-UTRA and NR are grouped into a cell group for each RAT and allocated to the UE, and data communication is performed using both radio resources of the MCG and the SCG. In the MR-DC, the master node may be a base station having primary RRC functions related to the MR-DC, for example, functions such as addition of the secondary node, establishment, change, and release of the RB, addition, change, and release of the MCG, handover, and the like, and the secondary node may be a base station having some RRC functions, for example, change and release of the SCG, and the like.

In the MR-DC described in NPL 8, the RRC of the RAT on the master node side may be used to configure both the MCG and the SCG. For example, in E-UTRA-NR Dual Connectivity (EN-DC), which is MR-DC in a case that the core network is the EPC 104 and the master node is the eNB 102 (also referred to as an extension type eNB 102), and NG-RAN E-UTRA-NR Dual Connectivity (NGEN-DC), which is MR-DC in a case that the core network is the 5GC 110 and the master node is the eNB 102, an RRC message of E-UTRA described in NPL 4 may be transmitted and/or received between the eNB 102 and the UE 122. In this case, the RRC message may include not only LTE (E-UTRA) configuration information but also NR configuration information described in NPL 10. Furthermore, the RRC message transmitted from the eNB 102 to the UE 122 may also be transmitted from the eNB 102 to the UE 122 through the gNB 108. Furthermore, the configuration of this RRC message may be used for an E-UTRA/5GC (option 5 described in NPL 17) which is non-MR-DC and in which the eNB 102 (extension type eNB) uses 5GC as the core network.

Furthermore, conversely, in the MR-DC described in NPL 8, in NR-E-UTRA Dual Connectivity (NE-DC), which is MR-DC in a case that the core network is the 5GC 110 and the master node is the gNB 108, an RRC message of NR described in NPL 10 may be transmitted and/or received between the gNB 102 and the UE 122. In this case, the RRC message may include not only NR configuration information but also LTE (E-UTRA) configuration information described in NPL 4. Furthermore, the RRC message transmitted from the gNB 108 to the UE 122 may also be transmitted from the gNB 108 to the UE 122 through the eNB 102.

Note that, without limited to the case that the MR-DC is used, an RRC message for E-UTRA transmitted from the eNB 102 to the UE 122 may include an RRC message for NR, or an RRC message for NR transmitted from the gNB 108 to the UE 122 may include an RRC message for E-UTRA.

### Embodiment

An embodiment of the present invention will be described with reference to FIG. 1 to FIG. 8. In the embodiment of the present invention, processing will be described in a case that a connection destination core network of the UE 122 switches from the EPC 104 to the 5GC 110 by handover or the like. The fact that the connection destination core network of the UE 122 switches from the EPC 104 to the 5GC 110 may be switching from a state in which the UE 122 is connected to the EPC 104 via the eNB 102 to a state in which the UE 122 is connected to the 5GC 110 via the eNB 102. Furthermore, the fact that the connection destination core network of the UE 122 switches from the EPC 104 to the 5GC 110 may be a case of switching from a state in which the UE 122 is connected to the EPC 104 via the eNB 102 to a state in which the UE 122 is connected to the 5GC 110 via the gNB 108.

Note that in the embodiment of the present invention, a handover with switching of a core network which is a connection destination of a terminal apparatus may be referred to as an inter system handover, and a handover without switching of a core network which is a connection destination of the terminal apparatus may be referred to as an intra system handover. Furthermore, in the embodiment of the present invention, a handover with switching of an RAT which is a connection destination of a terminal apparatus may be referred to as an inter RAT handover, and a handover without switching of a core network which is a connection destination of the terminal apparatus may be referred to as an intra RAT handover. That is, a handover that the connection destination base station of the UE 122 switches from the eNB to the gNB or from the gNB to the eNB may be referred to as the inter RAT handover, and a handover that the connection destination base station of the UE 122 switches from the eNB to the eNB or from the gNB to the gNB may be referred to as the intra RAT handover.

In the embodiment of the present invention, the handover may be performed, in a case that the terminal apparatus receives a message related to an RRC connection reconfiguration transmitted from the base station apparatus, based on the fact that various parameters related to the handover are included in the message related to the RRC connection reconfiguration. Furthermore, the various parameters related to the handover may be an information element named MobilityControlInfo described in NPL 4, may be an information element named ReconfigurationWithSync described in NPL 10, or may be an information element with another name.

Furthermore, in the embodiment of the present invention, the handover may be performed based on the fact that the terminal apparatus has received, from the base station apparatus, an RRC message indicating mobility from an RAT (E-UTRA, NR, or the like) to which the terminal apparatus is currently connected to a second RAT (E-UTRA, NR, UTRA, GERAN, or the like). The RRC message indicating mobility from the currently connected RAT to the second RAT may be named MobilityFromEUTRACommand as described in NPL 4, may be named MobilityFromNRCommand described in NPL 10, or may have another name. Furthermore, the RRC message indicating mobility from the currently connected RAT to the second RAT described above may include a message related to an RRC connection reconfiguration related to a configuration of the second RAT described above.

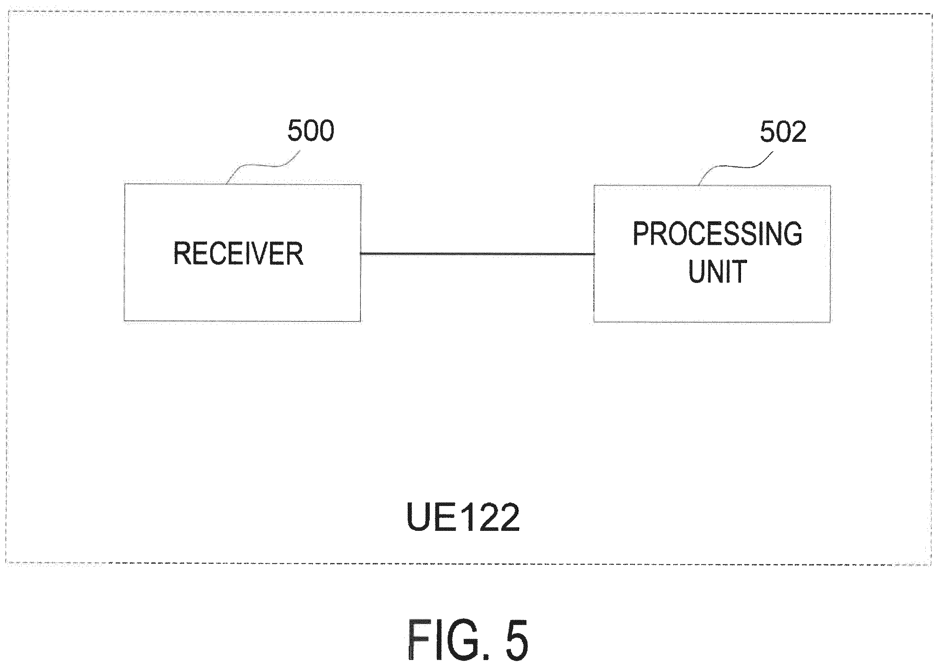

FIG. 5 is a block diagram illustrating a configuration of the terminal apparatus (UE 122) according to each embodiment of the present invention. Note that FIG. 5 illustrates only the main components closely related to an aspect of the present invention in order to avoid complexity of description.

The UE 122 illustrated in FIG. 5 includes a receiver 500 that receives an RRC message and the like from the eNB 102 and/or the gNB 108, and a processing unit 502 that performs processing in accordance with configuration information, such as various Information Elements (IEs) and/or various fields and/or various conditions, included in the received message.

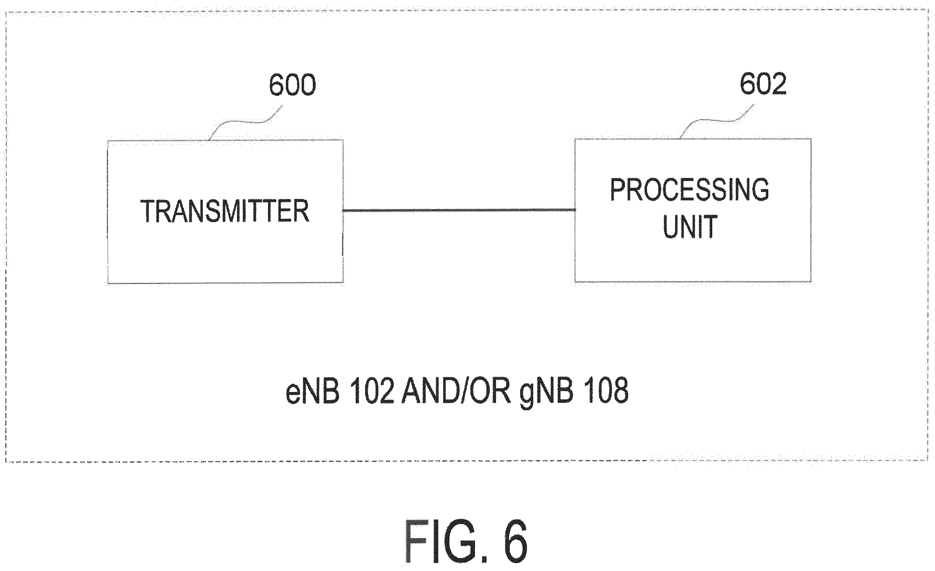

FIG. 6 is a block diagram illustrating a configuration of a base station apparatus (eNB 102 and/or gNB 108) according to each embodiment of the present invention. Note that FIG. 6 illustrates only the main components closely related to an aspect of the present invention in order to avoid complexity of description.

The eNB 102 and/or the gNB 108 illustrated in FIG. 6 includes a transmitter 600 that transmits an RRC message and the like to the UE 122, and a processing unit 602 that, by creating the RRC message in which configuration information, such as various Information Elements (IEs) and/or various fields and/or various conditions, is included and transmitting the message to the UE 122, causes the processing unit 502 of the UE 122 to perform processing.

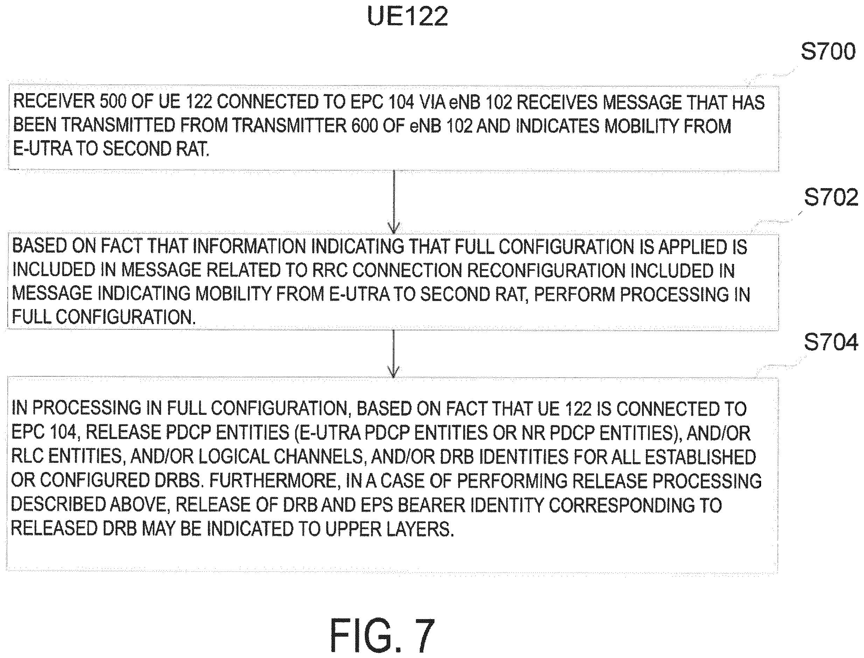

Using FIG. 7, an example of a processing method of the UE 122 according to the embodiment of the present invention will be described.

The receiver 500 of the UE 122 connected to the EPC 104 via the eNB 102 receives a message that has been transmitted from the transmitter 600 of the eNB 102 and indicates mobility from the E-UTRA to the second RAT (step S700).

The processing unit 502 of the UE 122 confirms whether or not information indicating that a full configuration is applied is included in the message related to the RRC connection reconfiguration included in the above-described message indicating mobility from the E-UTRA to the second RAT. In a case of being included, based on the fact that the information indicating that the full configuration is applied is included in the message related to the RRC connection reconfiguration, processing in the full configuration is performed (step S702).

Note that the message related to the RRC connection reconfiguration described above may be a message named RRCConnectionReconfiguration described in NPL 4, or may be a message named RRCReconfiguration described in NPL 10. Furthermore, the full configuration described above may be information named Full Configuration described in NPL 4, or may be information named Full Configuration described in NPL 10.

The processing unit 502 of the UE 122 confirms a core network that is a connection destination of the UE 122 in processing in the full configuration. In a case that the connection destination core network of the UE 122 is the EPC 104, based on the fact that the UE 122 is connected to the EPC 104, PDCP entities for all DRBs established or configured are released. Note that the expression "the PDCP entities for all DRBs established or configured are released" may be expressed as "E-UTRA PDCP entities or NR PDCP entities for all DRBs established or configured are released". Furthermore, in a case that the PDCP entities for all DRBs established or configured are released, RLC entities, and/or logical channels, and/or DRB Identities for all DRBs established or configured may be released. Furthermore, in a case of performing the release processing described above, the release of the DRB and an EPS bearer identity corresponding to the released DRB may be indicated to the upper layers (step S704).

Note that all DRBs established or configured as described above may be referred to as all RBs established or configured. Furthermore, all DRBs established or configured as described above may be DRBs corresponding to all EPS bearer identities configured by the UE 122.

Note that the determination based on the fact that the UE 122 is connected to the EPC 104 described above may be determination based on the fact that the UE is not connected to the 5GC 110, or may be determination based on mobility from the EPC 104 to the 5GC 110. Furthermore, the mobility from the EPC 104 to the 5GC 110 described above may be rephrased as an inter system handover (from the EPC 104 to the 5GC 110), and the inter system handover described above may be the inter system handover and the inter RAT handover, or may be the inter system handover and the intra RAT handover.

Furthermore, the determination based on the fact that the UE 122 is connected to the EPC 104 described above may be determination based on the fact that, in the message related to the RRC connection reconfiguration described above, information explicitly indicating an inter system handover from the EPC 104 to the 5GC 110, or information from which an inter system handover from the EPC 104 to the 5GC 110 can be recognized (information implicitly indicating an inter system handover from the EPC 104 to the 5GC 110) is included. The information indicating an inter system handover from the EPC 104 to the 5GC 110, or the information from which an inter system handover from the EPC 104 to the 5GC 110 can be recognized described above may be, for example, an information element named nas-Container described in NPL 10, or may be an information element with another name. The information element named nas-Container described above may be included in information indicating master key change.

Furthermore, the processing unit 502 of the UE 122 may, in the processing in the full configuration described above, in a case that the E-UTRA PDCP entity is configured or the E-UTRA PDCP entity has been configured for each SRB Identity included in the message related to the RRC connection reconfiguration described above, release the E-UTRA PDCP entity. Furthermore, the NR PDCP may be established after releasing the E-UTRA PDCP entity. Furthermore, in a case that an E-UTRA RLC bearer is established or configured or the E-UTRA RLC bearer has been established or configured for each SRB identity included in the message related to the RRC connection reconfiguration, the E-UTRA RLC bearer may be released. The RLC bearer described above may be the RLC entity and/or the logical channel (not illustrated).

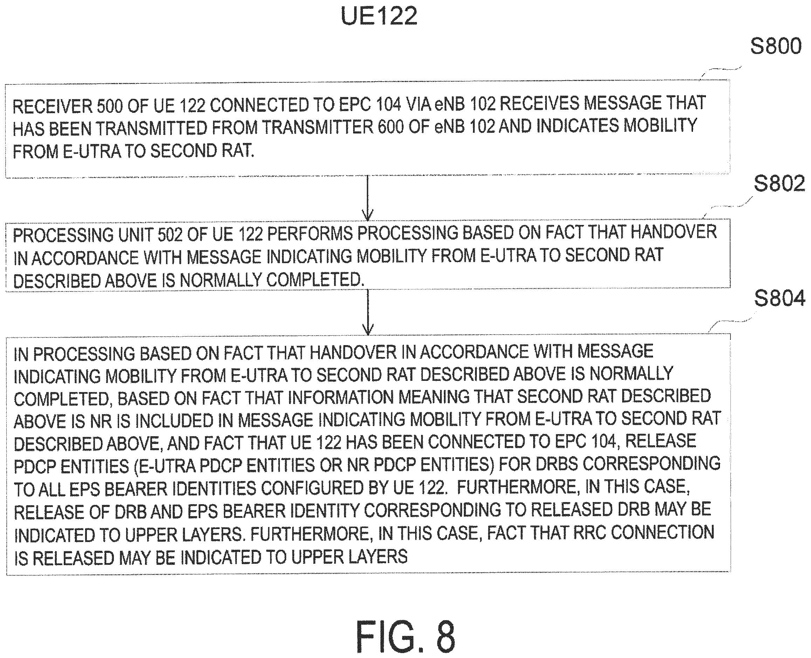

Using FIG. 8, another example of a processing method of the UE 122 according to the embodiment of the present invention will be described.

The receiver 500 of the UE 122 connected to the EPC 104 via the eNB 102 receives a message that has been transmitted from the transmitter 600 of the eNB 102 and indicates mobility from the E-UTRA to the second RAT (step S800).

The processing unit 502 of the UE 122 performs handover processing in accordance with the message indicating mobility from the E-UTRA to the second RAT described above, and further performs processing based on the fact that the handover in accordance with the message indicating mobility from the E-UTRA to the second RAT described above is normally completed (step S802).

The processing unit 502 of the UE 122 releases the PDCP entity, in the processing based on the fact that the handover in accordance with the message indicating mobility from the E-UTRA to the second RAT described above is normally completed, based on the fact that information meaning that the above-described second RAT is the NR is included in the message indicating mobility from the E-UTRA to the second RAT described above, and the fact that the UE 122 has been connected to the EPC 104, for DRBs corresponding to all EPS bearer Identities configured by the UE 122. Furthermore, in this case, for DRBs corresponding to all EPS bearer identities configured by the UE 122, the DRB identities may be released. Furthermore, in this case, the release of the DRB and the EPS bearer identity corresponding to the released DRB may be indicated to the upper layers. Furthermore, in this case, a fact that the RRC connection is released may be indicated to the upper layers. Note that the expression "releases the PDCP entity" described above may be expressed as the E-UTRA PDCP entity or the NR PDCP entity. Furthermore, the expression "for DRBs corresponding to all EPS bearer identities configured by the UE 122" described above may be expressed as "for all DRBs having been established". The expression "corresponding to all EPS bearer identities configured by the UE 122" described above may be expressed as "related to the EPC 104", "corresponding to the EPC 104", or the like, or another expression indicating relation, correspondence, or the like of the RB to the EPC 104 may be used. (step S804).

Furthermore, the processing unit 502 of the UE 122 may release the E-UTRA PDCP entity of the SRB, in the processing based on the fact that the handover in accordance with the message indicating mobility from the E-UTRA to the second RAT described above is normally completed, based on the fact that information meaning that the above-described second RAT is the NR is included in the message indicating mobility from the E-UTRA to the second RAT described above, and the fact that the UE 122 has been connected to the EPC 104. Furthermore, the release of the E-UTRA PDCP entity of the SRB described above may be performed in a case that the E-UTRA PDCP entity is established or configured or in a case that the E-UTRA PDCP entity has been established or configured, to the SRB. Furthermore, the processing of releasing the E-UTRA PDCP entity of the SRB described above may be performed on all SRBs established or configured (not illustrated).

Furthermore, the expression "the UE 122 has been connected to the EPC 104" described above may be expressed as that the UE 122 has not been connected to the 5GC 110.

Furthermore, the fact that the UE 122 has been connected to the EPC 104 described above may be that the UE 122 has been connected to the EPC 104 at the time of receiving the message indicating mobility from the E-UTRA to the second RAT described above, or may be that the UE 122 has been connected to the EPC 104 before performing the handover processing in accordance with the message indicating mobility from the E-UTRA to the second RAT described above.

Furthermore, the processing unit 502 of the UE 122 may releases RAN notification area information, in the processing based on the fact that the handover in accordance with the message indicating mobility from the E-UTRA to the second RAT described above is normally completed, based on the fact that, in the message indicating mobility from the E-UTRA to the second RAT described above, information meaning that the above-described second RAT is the NR is included and information meaning a handover in the 5GC is included. Furthermore, the release of the RAN notification area information described above may be performed in a case that the UE 122 stores the RAN notification area information. Furthermore, the RAN notification area information described above may include list information of a cell configured as the RAN notification area or RAN area, and/or a code of the RAN area, and/or a list of codes in the RAN area, etc. (not illustrated).

Furthermore, the processing unit 502 of the UE 122 may release the PDCP entities, and/or the DRB identities, and/or the SDAP entities related to all the PDU sessions configured by the UE 122, in the processing based on the fact that the handover in accordance with the message indicating mobility from the E-UTRA to the second RAT described above is normally completed, based on the fact that, in the message indicating mobility from the E-UTRA to the second RAT described above, information meaning that the above-described second RAT is the E-UTRA is included and information meaning an inter system handover from the 5GC 110 to the EPC 104 is included. Furthermore, in this case, a fact that a user plane resource corresponding to the PDU session is released may be indicated to the upper layers. Furthermore, the expression "related to all the PDU sessions configured by the UE 122" described above may be expressed as "related to the 5GC 110", "corresponding to the 5GC 110", or the like, or another expression indicating relation, correspondence, or the like of the RB to the 5GC 110 may be used. (not illustrated).

Furthermore, the processing unit 502 of the UE 122 may release the PDCP entities, and/or the DRB identities, for DRBs corresponding to all the EPS bearer identities configured by the UE 122, in the processing based on the fact that the handover in accordance with the message indicating mobility from the E-UTRA to the second RAT described above is normally completed, based on the fact that, in the message indicating mobility from the E-UTRA to the second RAT described above, information meaning that the above-described second RAT is the E-UTRA is included and information meaning an inter system handover from the EPC 104 to the 5GC 110 is included. Furthermore, in this case, a fact that the DRB is released and the EPS bearer identity corresponding to the released DRB may be indicated to the upper layers. Furthermore, the expression "corresponding to all EPS bearer identities configured by the UE 122" described above may be expressed as "related to the EPC 104", "corresponding to the EPC 104", or the like, or another expression indicating relation, correspondence, or the like of the RB to the EPC 104 may be used. (not illustrated).

Note that in a case that the receiver 500 of the UE 122 receives the message that is transmitted from the transmitter 600 of the gNB 108 and indicates mobility from the NR to the second RAT, the processing unit 502 of the UE 122 may perform processing based on the fact that the handover in accordance with the message indicating mobility from the NR to the second RAT described above is normally completed. In the processing based on the fact that the handover in accordance with the message indicating mobility from the NR to the second RAT described above is normally completed, based on the fact that a delta configuration is not used, and/or an inter system handover to the EPC 104, the PDCP entities, and/or the SDAP entities, and/or RB identities for all the RBs may be released. Furthermore, all the RBs described above may be referred to as RBs associated with the PDU session. Furthermore, the expression "all the RBs" described above may be expressed as "RBs related to the 5GC 110 or corresponding to the 5GC 110", or the like, or another expression indicating relation, correspondence, or the like of the RB to the 5GC 110 may be used. (not illustrated).

Furthermore, in a case that the receiver 500 of the UE 122 receives a message that is transmitted from the transmitter 600 of the gNB 108 and indicates mobility from the NR to the second RAT, in a case that information indicating that the RAT of the handover destination (target) is UMTS Terrestrial Radio Access (UTRA) or a GSM EDGE Radio Access Network (GERAN) is included in the message indicating mobility from the NR to the second RAT described above, based on the fact that the information indicating that the RAT of the handover destination (target) is the UTRA or the GERAN is included, the processing unit 502 of the UE 122 may regard that an inter RAT handover to the UTRA or the GERAN is activated. Furthermore, based on the fact that information indicating that the RAT of the handover destination (target) is the UTRA or the GERAN is included, in a case that information used for key synchronisation and/or key freshness in a case of an inter system and/or an inter system handover from the NR is included in the message indicating mobility from the NR to the second RAT described above, the information used for the key synchronisation and/or the key freshness in a case of the inter system and/or the inter system handover from the NR described above may be forwarded to the upper layers. The information used for the key synchronisation and/or the key freshness in a case of the inter system and/or the inter system handover from the NR described above may be information named nas-SecurityParamFromNR described in NPL 10. Furthermore, in the processing based on the fact that the handover in accordance with the message indicating mobility from the NR to the second RAT described above is normally completed, based on the fact that the RAT of the handover destination (target) is the E-UTRA, reset of the MAC, and/or stopping all timers in operation, and/or release of the RAN notification area information, and/or release of an AS security context, and/or release of all the radio resources, and/or indicating release of the RRC connection to the upper layers, and/or the like may be performed, and based on the fact that a delta configuration is not used, and/or an inter system handover to the EPC 104, the PDCP entities, and/or the SDAP entities, and/or RB identities for all the RBs may further be released. Furthermore, in the processing based on the fact that the handover in accordance with the message indicating mobility from the NR to the second RAT described above is normally completed, based on the fact that the RAT of the handover destination (target) is other than the E-UTRA (UTRA, GERAN, or the like), the release of the RRC connection may be indicated to the upper layers (not illustrated).

Note that the message indicating mobility from the E-UTRA to the second RAT according to the embodiment of the present invention may be a message named MobilityFromEUTRACommand described in NPL 4. Furthermore, the message indicating mobility from the NR to the second RAT according to the embodiment of the present invention may be a message named MobilityFromNRCommand described in NPL 10.

As described above, according to the embodiment of the present invention, processing corresponding to the types of the handover source RAT, the handover destination RAT, the handover source core network, and the handover destination core network of the UE 122 can be performed. That is, the terminal apparatus can efficiently perform communication by reducing complexity of protocol processing.

Note that the terminal apparatus and the method according to each embodiment of the present invention can be described as follows, for example.

That is, a terminal apparatus for communicating with a base station apparatus, the terminal apparatus including: a receiver configured to receive a message related to an RRC connection reconfiguration from the base station apparatus; and a processing unit configured, based on the fact that information for indicating that a full configuration is applied is included in the message related to the RRC connection reconfiguration, to perform processing in the full configuration, and configured, in the processing in the full configuration, based on the fact that the terminal apparatus is not connected to a 5G core network, to perform processing to release a PDCP entity for all established DRBs.

Furthermore, an aspect of the present invention is a terminal apparatus for communicating with a base station apparatus, the terminal apparatus including: a receiver configured to receive a message for indicating mobility from an E-UTRA to a second RAT from the base station apparatus; and a processing unit configured to perform processing based on the fact that a handover in accordance with the message for indicating a handover from the E-UTRA to the second RAT is normally completed, and configured, in the processing based on the fact that the handover is normally completed, based on the fact that information for indicating that the second RAT is an NR is included in the message for indicating the handover from the E-UTRA to the second RAT and the fact that the terminal apparatus has been connected to the EPC, for DRBs corresponding to all established EPS bearer IDs, to perform processing to release a PDCP entity.

Furthermore, an aspect of the present invention is a base station apparatus for communicating with a terminal apparatus, the base station apparatus including: a transmitter configured to transmit a message related to an RRC connection reconfiguration to the terminal apparatus; and a processing unit configured to cause the terminal apparatus, based on the fact that information for indicating that a full configuration is applied is included in the message related to the RRC connection reconfiguration, to perform processing in the full configuration, and configured, in the processing in the full configuration, based on the fact that the terminal apparatus is not connected to a 5G core network, to cause the terminal apparatus to perform processing to release a PDCP entity for all established DRBs.

Furthermore, an aspect of the present invention is a base station apparatus for communicating with a terminal apparatus, the base station apparatus including: a transmitter configured to transmit a message for indicating mobility from an E-UTRA to a second RAT to the terminal apparatus; and a processing unit configured to cause the terminal apparatus to perform processing based on the fact that a handover in accordance with the message for indicating a handover from the E-UTRA to the second RAT is normally completed, and configured, in the processing based on the fact that the handover is normally completed, based on the fact that information for indicating that the second RAT is an NR is included in the message for indicating the handover from the E-UTRA to the second RAT and the fact that the terminal apparatus has been connected to the EPC, for DRBs corresponding to all established EPS bearer IDs, to cause the terminal apparatus to perform processing to release a PDCP entity.

Furthermore, an aspect of the present invention is a method for a terminal apparatus for communicating with a base station apparatus, the method including the steps of: receiving a message related to an RRC connection reconfiguration from the base station apparatus; performing, based on the fact that information for indicating that a full configuration is applied is included in the message related to the RRC connection reconfiguration, processing in the full configuration; and performing, in the processing in the full configuration, based on the fact that the terminal apparatus is not connected to a 5G core network, processing to release a PDCP entity for all established DRBs.

Furthermore, an aspect of the present invention is a method for a terminal apparatus for communicating with a base station apparatus, the method including the steps of: receiving a message for indicating mobility from an E-UTRA to a second RAT from the base station apparatus; performing processing based on the fact that a handover in accordance with the message for indicating a handover from the E-UTRA to the second RAT is normally completed; and performing, in the processing based on the fact that the handover is normally completed, based on the fact that information for indicating that the second RAT is an NR is included in the message for indicating the handover from the E-UTRA to the second RAT and the fact that the terminal apparatus has been connected to the EPC, for DRBs corresponding to all established EPS bearer IDs, processing to release a PDCP entity.

Furthermore, an aspect of the present invention is a method for a base station apparatus for communicating with a terminal apparatus, the method including the steps of: transmitting a message related to an RRC connection reconfiguration to the terminal apparatus; causing the terminal apparatus, based on the fact that information for indicating that a full configuration is applied is included in the message related to the RRC connection reconfiguration, to perform processing in the full configuration; and causing the terminal apparatus, in the processing in the full configuration, based on the fact that the terminal apparatus is not connected to a 5G core network, to perform processing to release a PDCP entity for all established DRBs.

Furthermore, an aspect of the present invention is a method for a base station apparatus for communicating with a terminal apparatus, the method including: a transmitter configured to transmit a message for indicating mobility from an E-UTRA to a second RAT to the terminal apparatus; causing the terminal apparatus to perform processing based on the fact that a handover in accordance with the message for indicating a handover from the E-UTRA to the second RAT is normally completed; and causing the terminal apparatus, in the processing based on the fact that the handover is normally completed, based on the fact that information for indicating that the second RAT is an NR is included in the message for indicating the handover from the E-UTRA to the second RAT and the fact that the terminal apparatus has been connected to the EPC, for DRBs corresponding to all established EPS bearer IDs, to perform processing to release a PDCP entity.

A program operating on an apparatus according to the present invention may serve as a program that controls a Central Processing Unit (CPU) and the like to cause a computer to operate in such a manner as to realize the functions of the above-described embodiments according to the present invention. Programs or the information handled by the programs are temporarily loaded into a volatile memory such as a Random Access Memory (RAM) while being processed, or stored in a non-volatile memory such as a flash memory, or a Hard Disk Drive (HDD), and then read, modified, and written by the CPU, as necessary.

Note that the apparatuses in the above-described embodiments may be partially enabled by a computer. In such a case, a program for realizing such control functions may be recorded on a computer-readable recording medium to cause a computer system to read the program recorded on the recording medium to perform the program. It is assumed that the "computer system" mentioned here refers to a computer system built into the apparatuses, and the computer system includes an operating system and hardware components such as a peripheral device. Furthermore, the "computer-readable recording medium" may be any of a semiconductor recording medium, an optical recording medium, a magnetic recording medium, and the like.

Moreover, the "computer-readable recording medium" may include a medium that dynamically retains a program for a short period of time, such as a communication line that is used to transmit the program over a network such as the Internet or over a communication line such as a telephone line, and may also include a medium that retains a program for a fixed period of time, such as a volatile memory within the computer system for functioning as a server or a client in such a case. Furthermore, the above-described program may be configured to realize some of the functions described above, and additionally may be configured to realize the functions described above, in combination with a program already recorded in the computer system.

Furthermore, each functional block or various characteristics of the apparatuses used in the above-described embodiments may be implemented or performed with an electric circuit, that is, typically an integrated circuit or multiple integrated circuits. An electric circuit designed to perform the functions described in the present specification may include a general purpose processor, a digital signal processor (DSP), an application specific integrated circuit (ASIC), a field programmable gate array (FPGA), or other programmable logic devices, discrete gates or transistor logic, discrete hardware components, or a combination thereof. The general-purpose processor may be a microprocessor, or the processor may be a processor of known type, a controller, a microcontroller, or a state machine instead. The general-purpose processor or the above-mentioned circuits may include a digital circuit, or may include an analog circuit. Furthermore, in a case that with advances in semiconductor technology, a circuit integration technology appears that replaces the present integrated circuits, it is also possible to use an integrated circuit based on the technology.

Note that the invention of the present application is not limited to the above-described embodiments. Although apparatuses have been described as an example in the embodiment, the invention of the present application is not limited to these apparatuses, and is applicable to a stationary type or a non-movable type electronic apparatus installed indoors or outdoors such as a terminal apparatus or a communication apparatus, for example, an AV device, a kitchen device, a cleaning or washing machine, an air-conditioning device, office equipment, a vending machine, and other household appliances.

Although, the embodiments of the present invention have been described in detail above referring to the drawings, the specific configuration is not limited to the embodiments and includes, for example, design changes within the scope not depart from the gist of the present invention. Furthermore, various modifications of the present invention are possible within the scope of claims, and embodiments that are made by suitably combining technical means disclosed according to the different embodiments are also included in the technical scope of the present invention. In addition, a configuration in which components, which are described in the embodiment described above, having similar effects are interchanged is also included in the present invention.

## Claims

1. A terminal apparatus for communicating with a base station apparatus, the terminal apparatus comprising:
a receiver configured to receive an RRC message from the base station apparatus; and
a processing unit, wherein
the RRC message is a message for indicating mobility from a first RAT to a second RAT, the first RAT being NR, and
the processing unit performs, based on a fact that information for indicating that the second RAT is UTRA is included in the RRC message, processing to forward, to upper layers, information used for key synchronisation and key freshness included in the RRC message.

2. A base station apparatus for communicating with a terminal apparatus, the base station apparatus comprising:
a transmitter configured to transmit an RRC message to the terminal apparatus; and
a processing unit, wherein
the RRC message is a message for indicating mobility from a first RAT to a second RAT, the first RAT being NR, and
the processing unit causes the terminal apparatus, based on a fact that information for indicating that the second RAT is UTRA is included in the RRC message, to perform processing to forward, to upper layers, information used for key synchronisation and key freshness included in the RRC message.

3. A method for a terminal apparatus for communicating with a base station apparatus, the method comprising the step of:
receiving an RRC message from the base station apparatus, wherein
the RRC message is a message for indicating mobility from a first RAT to a second RAT, the first RAT being NR, and
based on a fact that information for indicating that the second RAT is UTRA is included in the RRC message, processing to forward, to upper layers, information used for key synchronisation and key freshness included in the RRC message is performed.

4. A method for a base station apparatus for communicating with a terminal apparatus, the method comprising the step of:
transmitting an RRC message to the terminal apparatus, wherein
the RRC message is a message for indicating mobility from a first RAT to a second RAT, the first RAT being NR, and
the terminal apparatus is caused, based on a fact that information for indicating that the second RAT is UTRA is included in the RRC message, to perform processing to forward, to upper layers, information used for key synchronisation and key freshness included in the RRC message.
